# EUROPÄISCHE PATENTSCHRIFT

(11) **EP 1 259 797 B1**
(45) Veröffentlichungstag und Bekanntmachung des Hinweises auf die Patenterteilung: **02.09.2009**
(21) Anmeldenummer: 00977555.2
(22) Anmeldetag: 22.11.2000
(51) Int. Cl.: G01N 21/64, G01J 3/02, G01J 3/44, G01J 3/443

(54) **VORRICHTUNG ZUR OPTISCHEN SPEKTROSKOPIE UND VERFAHREN ZU DESSEN HERSTELLUNG**
OPTICAL SPECTROSCOPY DEVICE AND METHOD FOR THE PRODUCTION THEREOF
DISPOSITIF DE SPECTROSCOPIE OPTIQUE ET PROCEDE DE FABRICATION DUDIT DISPOSITIF

(30) Priorität: 01.12.1999 DE 19957682
(43) Veröffentlichungstag der Anmeldung: 27.11.2002
(73) Patentinhaber: Deutsche Telekom AG, 53113 Bonn (DE)
(72) Erfinder: KOOPS, Hans, W., P., 64372 Ober-Ramstadt (DE); REINHARDT, Andreas, 63512 Hainburg (DE)
(74) Vertreter: Blumbach - Zinngrebe
(86) Internationale Anmeldenummer: PCT/EP2000/011618
(87) Internationale Veröffentlichungsnummer: WO 2001/040777

(56) Entgegenhaltungen:
- EP-A- 0 709 659
- WO-A-98/53284
- WO-A-99/03021
- WO-A-99/53350
- DE-A- 19 745 324
- US-A- 5 550 375
- US-A- 5 833 603
- US-A- 5 861 626

## Beschreibung

Die Erfindung betrifft eine Vorrichtung zur optischen Spektroskopie und ein Verfahren zu dessen Herstellung.

Es sind zahlreiche Vorrichtungen zur optischen Spektroskopie bekannt, die zu unterschiedlichen spektroskopischen Methoden eingesetzt werden können. Bei diesen im wesentlichen aus optischen Spektrometern bestehenden Vorrichtungen kann die zu analysierende optische Strahlung durch verschiedene physikalische Prozesse der zu untersuchenden Substanzen angeregt werden. Solche Anregungsprozesse können thermischer, elektrischer und/oder optischer Art sein. Die dazu notwendigen Einrichtungen wie etwa die einer Lichtquelle können sowohl in den Spektrometern selbst enthalten sein, aber auch extern dazu vorgesehen sein.

In Abhängigkeit von den zu untersuchenden Substanzen müssen dabei bestimmte Bedingungen etwa hinsichtlich des zu analysierenden Spektralbereiches oder einer aufzubringenden Anregungsenergie erfüllt werden können.

So wird beispielsweise in der pharmazeutischen Industrie bei chemischen Reaktionen zum Nachweis einer Bildung neuer Wirkstoffe zunehmend optische Spektroskopie eingesetzt. Dabei wird im wesentlichen Fluoreszenzstrahlung analysiert.

Aufgrund der Vielzahl möglicher Reaktionsprodukte bei derartigen chemischen Reaktionen von neuen als auch bekannten Substanzen untereinander werden effiziente Untersuchungsgeräte bzw. Verfahren angestrebt. Außerdem wird auf Grund dieser Vielzahl die zu einer Analyse zur Verfügung stehende Menge zunehmend geringer gewählt. So werden bereits Reagenzien in reihenweise oder flächig angeordnete Reaktionsgefäße in Form von Näpfchen mit einem Fassungsvolumen von etwa 1×10⁻⁶ l gefüllt. Dabei werden die Reagenzien mit automatisiert arbeitenden Mikropipetten in die bis zu einigen Tausend Näpfchen einer Untersuchungsreihe gefüllt. Die Reagenzien werden z.T. in geringen Mengen, etwa im Bereich von 10⁻¹² 1 benutzt.

Diese Näpfchen werden dann durch optische Meßverfahren beobachtet und hinsichtlich eines bestimmten Reaktionsproduktes ausgemessen. Das Vorliegen einer Reaktion wird dabei u.a. durch Beobachtung von fluoreszierenden Molekülen ermittelt, die an die Reagenzien angehängt wurden. Ob die Reaktion stattgefunden hat, wird aus der Bewegungsgeschwindigkeit der Moleküle des Reaktionsproduktes beurteilt, die gemessen wird. Dabei kann der Meßweg etwa durch eine definierte Beleuchtung des Reaktionsgefäßes festgestellt werden. Die Zeitdauer der Emission einer solchen Fluoreszenzstrahlung wird z.B. durch Zeitmessung des nach spektrometrischer Zerlegung erhaltenen Fluoreszenzlichtes gemessen und daraus auf die erfolgte Reaktion und auf die erhaltenen Reaktionsprodukte geschlossen. Die Messung erfolgt rechnergesteuert und das Meßsystem wird dabei von Reaktionsvolumen zu Reaktionsvolumen bewegt, bzw. die Anordnung von Reaktionsgefäßen unter einem Mikroskop hinweg verschoben.

Als Meßsysteme werden dabei makroskopische Fluoreszensmikroskope mit Beleuchtungslaser, klassischer Beleuchtungs und in-line-Abbildungsoptik mit Strahlteilern und nachfolgendem Spektrometer eingesetzt. Derartige, von G. Gradi et al. in Bio Methods, Bd. 10, S. 331-351, Birkhäuser Verlag Basel und von S. Sterrer in J. of Receptor and Signal Transduction Research, Bd 17, 1997, S. 511-520 beschriebene Meßsysteme beschränken aber durch ihren massiven Aufbau die Anwendung auf nur einen sehr begrenzten Reaktionsraum.

Aus der EP-A-2-0709659 ist ein miniaturisiertes integriertes Spektrometer zu entnehmen, bei dem die Zielsetzung ist alle Komponenten einschließlich der Strahlungsquelle, des Detektors und der Steuerungselektronik auf einem einzigen Substrat unterzubringen.

Ferner ist aus der WO 99/53350 ein monolithisches Infrarotspektrometer zu entnehmen, welches einen aus Silizium hergestellten Wellenleiter umfasst, der so ausgebildet ist, dass er die zur Analyse notwendigen Komponenten wie z.B. die Spiegel und ein Gitter beinhaltet. Allerdings dient er nicht zur Analyse von sichtbarem Licht, da Silizium im sichtbaren Bereich undurchsichtig ist.

Der Erfindung liegt daher die Aufgabe zugrunde, eine Vorrichtung zur optischen Spektoskopie, insbesondere ein Fluoreszenzspektrometer bereitzustellen, die in ihrer Dimension den zu untersuchenden zunehmend kleineren Reaktionsvolumina angepaßt werden kann, und die es durch ihren Aufbau ermöglicht, einen höheren Durchsatz bei der Untersuchung zu erzielen. Eine weitere Aufgabe der vorliegenden Erfindung besteht darin, eine Vorrichtung zu schaffen, die einfach, schnell und kostengünstig in industrieller Fertigung herstellbar ist und zuverlässig betrieben werden kann.

Zur Lösung dienen die Merkmale des Anspruchs 1 bzw. 14.

Die Vorrichtung bringt den Vorteil mit sich, daß durch ihre Dimensionierung eine kurzbrennweitige Fokussierungs- und Aufnahme-Optik möglich ist, durch die eine hohe numerische Apertur erreicht werden kann. Zudem können eine deutliche Reduzierung der Zeitkonstanten der Detektoren, d.h. eine Erhöhung deren oberer Grenzfrequenzen, bei gleichzeitig hoher Empfindlichkeit erreicht werden. Desweiteren sind bei der erfindungsgemäßen Vorrichtung sowohl die detektorbedingten Totzeiten als auch experimentelle Umrüstzeiten der Spektrometer reduziert.

Weitere vorteilhafte Merkmale der Erfindung ergeben sich aus den Unteransprüchen.

Die erfindungsgemäße Vorrichtung zur optischen Spektroskopie umfaßt wenigstens eine Lichtquelle und wenigstens ein integriert hergestelltes Spektrometer, wobei die optischen Komponenten des wenigstens einen Spektrometers optische Mikrokomponenten sind, die an der Ober- und/oder Unterseite einer Trägerplatte integriert angebracht sind. Für die Erfindung ist es unwesentlich, ob die Lichtquelle und das Spektrometer als separate Einheiten oder die Lichtquelle als Bestandteil des Spektrometers aufgefaßt wird. Zusätzlich weist das wenigstens eine Spektrometer eine an der Unterseite der Trägerplatte angebrachte Fokussierungslinse zur Fokussierung eines von der Lichtquelle ausgesandten ersten Lichtstrahls auf. Weiterhin ist an der Unterseite der Trägerplatte eine Sammellinse zur Bündelung eines zweiten Lichtstrahls auf ein, auf der Oberseite der Trägerplatte angebrachtes dispersives Element und wenigstens ein der Trägerplatte zugeordneter Detektor vorgesehen. Oberhalb der Fokussierungslinse und der Sammellinse weist die Trägerplatte jeweils einen lichtdurchlässigen Bereich auf. Vorteilhafterweise entfällt durch die Kombination von Fokussierungs- und Sammelinse die Verwendung einer Strahlsortierungsblende.

Bei dem erfindungsgemäßen Verfahren zur Herstellung einer Vorrichtung zur optischen Spektroskopie wird wenigstens eine Lichtquelle auf einer Trägerplatte angebracht und wenigstens ein Spektrometer in drei-dimensionaler Integration an der Trägerplatte erzeugt. Dabei wird das wenigstens eine Spektrometer aus optischen Mikrokomponenten aufgebaut. Der besondere Vorteil des erfindungsgemäßen Verfahrens liegt darin, dass das wenigstens eine Spektrometer mit Hilfe additiver Lithografie hergestellt wird.

In einer bevorzugten Ausführungsform der vorliegenden Erfindung sind die optischen Mikrokomponenten monolithisch auf der Trägerplatte aufgebracht.

Besonders bevorzugt kann das wenigstens eine Spektrometer ein auf der Oberseite der Trägerplatte angebrachtes erstes Umlenkelement zur Umlenkung des von der Lichtquelle kommenden ersten Lichtstrahls zu einer an der Unterseite der Trägerplatte angebrachten Fokussierungslinse aufweisen. Die an der Unterseite der Trägerplatte angebrachte Sammellinse dient der Bündelung des zweiten Lichtstrahls auf ein an der Oberseite der Trägerplatte angebrachte zweite Umlenkelement, welches den zweiten Lichtstrahl auf das an der Oberseite der Trägerplatte angebrachtes dispersives Element und einen auf der Oberseite der Trägerplatte angebrachten, lithografisch herstellbaren Detektor aufweist. Das erste und zweite Umlenkelement sind hier vorzugsweise als Umlenkprismen ausgebildet. Erster und zweiter Lichtstrahl werden zwischen einer Ebene parallel zur Trägerplatte und dazu nahezu orthogonalen Richtungen umgelenkt. Durch die geringe Anzahl der brechenden Flächen und die Strahlumlenkung aus der Horizontalen in die Richtung nahe der Vertikalen durch Totalreflexion am Umlenkprisma wird der Lichtverlust durch Streuung und Reflexion klein gehalten.

Das dispersive Element kann ein Beugungsgitter sein. Besonders bevorzugt ist ein als Phasen- oder Echelette-Gitter ausgeführtes Beugungsgitter.

Erfindungsgemäß ist auch vorgesehen, das wenigstens eine Spektrometer mit einer Detektoranordnung aus mehreren Detektoren auszustatten.

In einer bevorzugten Ausführungsform der Erfindung ist die Lichtquelle als miniaturisierte unlösbar mit der Trägerplatte verbindbare Laserdiode ausgebildet.

Besonders bevorzugt ist es auch, mehrere Spektrometer nebeneinander und/oder hintereinander an der Trägerplatte integriert anzubringen. Dabei kann der von der Lichtquelle ausgesendete Lichtstrahl über Strahlteiler zugeführt werden, die auf der Oberseite der Trägerplatte angebracht sind. Es können jedoch auch mehrere Spektrometer reihen- oder matrixartig auf der Trägerplatte integriert angebracht sein, die eine Lichtquelle enthalten.

Eine bevorzugte Ausführungsform der Erfindung kann zusätzlich zu den oben beschriebenen optischen Komponenten eine gegenüber der Unterseite der Trägerplatte angeordnete Anordnung von Reaktionsgefäßen beinhalten. Dabei können das wenigstens eine Spektrometer und die Anordnung von Reaktionsgefäßen im wesentlichen parallel zueinander angeordnet und relativ zueinander bewegbar sein. Auch können in dieser Ausführungsform die Spektrometer in verschiedenen geometrischen Anordnungen, wie z.B. in Reihe angeordnet sein. Die Bewegung der Spektrometerreihe und der Anordnung der Reaktionsgefäße kann auch automatisiert durchführbar sein. Die erfindungsgemäße Vorrichtung mit parallel arbeitenden Spektrometern kann durch integrierende Technik und rechnergesteuerten Aufbau in großen Stückzahlen hergestellt werden.

In einer anderen Ausführungsform erfolgt die relative Bewegung der Anordnung des oder der Spektrometer bzw. Spektrometerreihe durch einen Antrieb mit Luftlagerung und/oder einen Verschiebetisch und/oder mit einem Piezoantrieb.

Die Erfindung wird nachfolgend an Hand der beiliegenden Zeichnungen an mehreren Ausführungsbeispielen näher erläutert.

Es zeigen
- Fig. 1: eine Schnittdarstellung einer Meßvorrichtung mit einem erfindungsgemäßen Fluoreszenzspektrometer,
- Fig. 2: eine Aufsicht auf das Fluoreszenzspektrometer nach Fig. 1,
- Fig. 3: eine Aufsicht auf eine alternative Meßvorrichtung entsprechend Fig. 1, wobei vier integrierte Fluoreszenzspektrometer vorhanden sind.

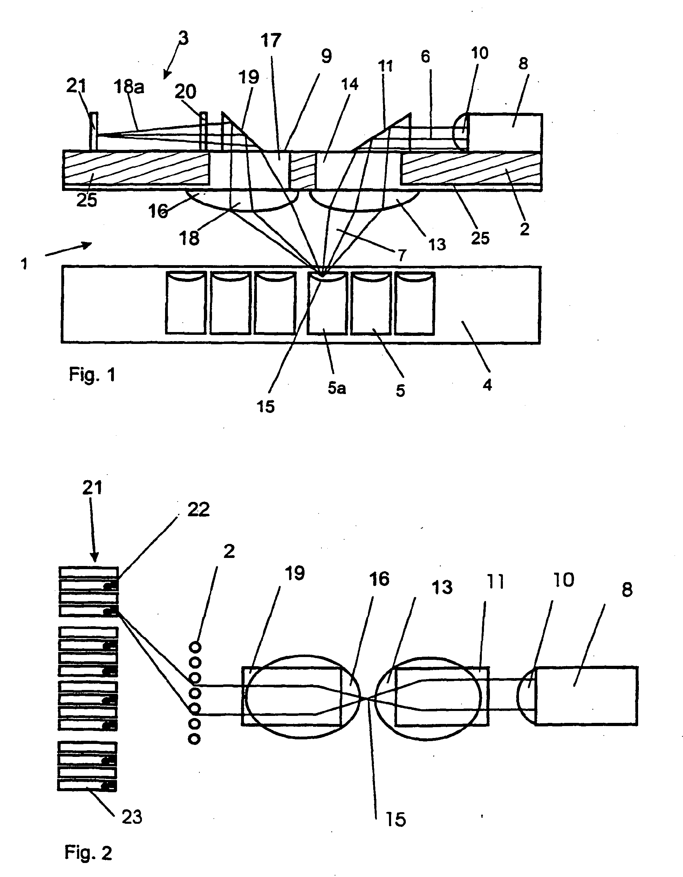

Fig. 1 zeigt eine nicht maßstabsgerecht dargestellte Meßvorrichtung 1 mit einem beispielhaften, auf einer Trägerplatte 2 integriert angebrachten Fluoreszenzspektrometer 3, eine Anordnung 4 aus beispielsweise sechs hintereinander angeordneten Reaktionsgefäßen 5 und die dazugehörenden Strahlengänge 6,7. An dieser Stelle sei erwähnt, daß sowohl mehrere Spektrometer 3 als auch mehrere Reaktionsgefäße 5 hintereinander, nebeneinander oder matrixartig angeordnet sein können. Das Spektrometer 3 weist eine Lichtquelle 8 auf, die als miniaturisierte Laserdiode 8 auf der Oberseite 9 der Trägerplatte 2 angebracht ist. Auf der Laserdiode 8 kann eine Strahlaperturformungs-Optik 10 angebracht sein.

Auf der Oberseite 9 der Trägerplatte 2 ist ferner ein Strahlumlenkprisma 11 und ein an geeigneter Stelle an der Unterseite 12 der Trägerplatte 2 angebrachtes Beleuchtungsobjektiv 13 vorgesehen. Das Beleuchtungsobjektiv 13 ist vorzugsweise als elliptische Fokussierungslinse 13 ausgeführt und enthält eine Bildfehlerkorrektur.

Oberhalb der Fokussierungslinse 13 weist die Trägerplatte 2 einen lichtdurchlässigen Bereich 14, vorzugsweise einen Durchgang 14 auf.

Der Fokusbereich 15 (Fig.1, 2 )der zur Fokussierung des Beleuchtungsstrahles 10 verwendeten Fokussierungslinse 13 hat dabei einen Durchmesser von etwa 1 µm. Erfindungsgemäß ist im integrierten Spektrometer 3 eine Sammelinse 16 auf der Unterseite 12 der Trägerplatte 2, so angebracht, daß sie an die Fokussierungslinse 13 angrenzt. Oberhalb der Sammellinse 16 weist die Trägerplatte 2 einen Durchgang 17 zur Durchführung von einem aus dem Reaktionsgefäß 5a ausgestrahlten Fluoreszenzlichtstrahls 18 auf. Durch diese neben der Fokussierungslinse 13 angebrachte Aufnahmelinse 16 wird Fluoreszenzlicht 18, das vom Beleuchtungsstrahl 7 angeregt wird, unter einem anderen Winkel mit hoher numerischer Apertur aufgenommen.

Ein von der Laserdiode 8 des Spektrometers 3 ausgehender Beleuchtungsstrahl 7 wird über das Strahlumlenkprisma durch den Durchgang 14 der Trägerplatte 2 hindurch gelenkt. Der Beleuchtungsstrahl 7 ist auf ein etwanur ein Volumen von ca. 10⁻⁶ 1 aufweisendes Reaktionsgefäß 5a fokussiert, das in der der Unterseite 12 der Trägerplatte 2 zugewandten Reaktionsgefäß-Anordnung (Array) 4 angeordnet ist.

Da die beiden Strahlengänge 7, 18 nur den Fokusbereich 15 gemeinsam haben, ist damit der Reaktionsraum durch das Schnittvolumen des Beleuchtungs- 7 und des dazu geneigten Fluoreszenzlichtstrahls 18 definiert und durch den Aufbau fest eingestellt. Das aufgenommene Fluoreszenslicht 18 wird in der Ausführungsform nach Fig.1 und Fig.2 von der Sammellinse 16 über ein in Totalreflexion arbeitendes Prisma 19 auf ein dispersives Element 20, vorzugsweise ein Beugungsgitter gebracht.

Vorzugsweise sind mehrere solcher Reaktionsgefäße 5 zu einer reihenartigen Anordnung 4 zusammengefügt. In dem Reaktionsgefäß 5a wird eine chemische Reaktion über eine Fluoreszenz eines oder mehrere angelagerter Moleküle nachgewiesen.

Die Fokussierungslinse 13 und die Sammellinse 16 sind Mikrolinsen mit einer durchstrahlbaren Fläche mit Achsen von etwa 10 - 100 µm.

In einer besonders bevorzugten Ausführungsform der Erfindung ist das dispersive Element 20 als freistehend aufgebautes Phasengitter 20 realisiert.

Das Fluoreszenzlicht 18 wird durch das Phasengitter 20 wellenlängenabhängig in unterschiedliche Richtungen auf eine Detektor-Anordnung 21 gebeugt. zwechmäßigerweise ist der Abstand einzelne Detektoren 22 der Detektor-Anordnung 21 in Abstimmung mit dem Beugungsgitter 20 derart gewählt, daß ein Detektor 22 jeweils von einer einzigen wohl definierten Wellenlänge des Fluoreszenzlichtes 18a fokussiert getroffen wird.

Die Detektoren 22 sind vorzugsweise als freistehende Strukturen ausgebildet und werden durch elektronenstrahlinduzierte Deposition mit einer Plazierungspräzision von einigen nm auf eine vorbereitete elektrische Anschlußstruktur in Form von Leiterbahnen 23 aufgebaut. Die Detektoren 22 sind dabei vorzugsweise als Photowiderstände, einer Länge von etwa 2 µm und einem Durchmesser von etwa 100 - 200 nm ausgebildet. Die Photowiderstände sind vorzugsweise als nanokristallines Material aus etwa Au oder Pt in einer dielektrischen Kohlenstoffmatrix realisiert.

Durch die Plazierung der Widerstände und die Fertigung der Gitterkonstante des Phasengitters 18 sind im Rahmen der Erfindung die detektierbaren Wellenlängen fest eingestellt, wie sie von zur Fluoreszenz anregbaren Markierungsmolekülen bekannt sind.

Durch die Verwendung des Phasengitters 18 wird alle Intensität in eine Beugungsordnung, vorzugsweise in die erste Beugungsordnung geleitet. Bei einer besonders bevorzugten Verwendung eines definiert ausgebildeten Echelette-Phasengitters wird alles gebeugte Licht in nur eine von zwei Ordnungen gleicher Ordnungszahl geleitet und so das maximale Fluoreszenslichtsignal erhalten. Vorteilhafterweise wird dazu die erste Ordnung gewählt.

Vorzugsweise können zwei Spektrometer 3 auch nebeneinander bzw. parallel angeordnet sein. Dann wird durch Einfügen eines Strahlteilers 24 ein von der vorzugsweise als Laserdiode ausgebildeten Lichtquelle 8 in zwei Teilstrahlen zur Versorgung der parallelen Spektrometer 3 aufgespalten.

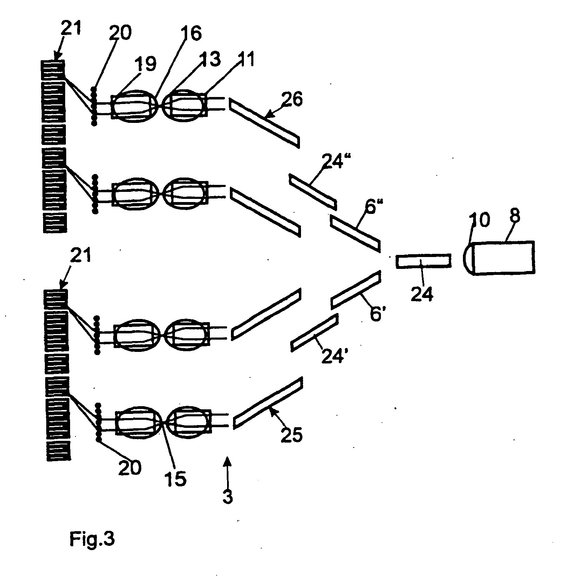

In einem besonders bevorzugten Ausführungsbeispiel nach Fig. 3 werden zwei Paare von Spektrometern 3 jeweils über einen Strahlteiler 24 mit Strahlung versorgt. Dabei wird auch bei der gezeigten mehrfachen paarweisen Anordnung von solchen Spektrometerpaaren der jeweilige Strahlengang mit Hilfe von Strahlteilern aus dem lediglich von einer Lichtquelle stammenden Lichtstrahl erzeugt.

Im übrigen ist die Vorrichtung nach Fig. 2 und 3 derjenigen in Fig. 1 gleich und daher sind identische oder gleiche Teile mit den gleichen Bezugszeichen versehen. Die Vorrichtung mit parallel arbeitenden Spektrometern 3 kann durch integrierende Technik und rechnergesteuerten Aufbau in großen Stückzahlen hergestellt werden. Vorteilhafterweise geschieht dies durch eine mehrfache Strahlaufspaltung. Dazu werden von einem zentralen Strahlteiler 24 ausgehende Strahlen 6', 6'' in zwei Spektrometerzweige 25, 26 gelenkt. In jedem der beiden Spektrometerzweige 25, 26 ist erfindungsgemäß wiederum jeweils ein Strahlteiler 24' bzw. 24'' vorgesehen. Die Strahlteiler 24' bzw. 24'' versorgen nun vorzugsweise je zwei Spektrometer der in Fig. 1 und Fig 2. gezeigten Art.

Im Rahmen der vorliegenden Erfindung sind optische Komponenten wie Linsen, Prismen und/oder Gitter mit Hilfe einer Trockenlacktechnik und/oder einer elektronenstrahlinduzierten Deposition rechnergesteuert aufgebaut. Erfindungsgemäß ist die Positionierung der optischen Komponenten auf einige nm genau einstellbar.

Die erfindungsgemäße Vorrichtung bzw. die nach dem erfindungsgemäßen Verfahren hergestellte Vorrichtung zur Spektroskopie kann im wesentlichen wie folgt eingesetzt werden.

Der Nachweis einer chemischen Reaktion wird über die Bewegung, im wesentlichen Brownsche Bewegung, der fluoreszierenden, an zumindest eine der beteiligten Reagenzien angehängten Moleküle geführt. Dabei wird die Geschwindigkeit der Moleküle im Reaktionsprodukt gemessen. Erfindungsgemäß geschieht dies dadurch, daß der Meßweg über eine durch die Optik vorgegebene Beleuchtungstrecke eingestellt wird. Die Zeitdauer der Fluoreszenzstrahlung entspricht der Zeit, für die Detektoren ein durch monochromatisches Fluoreszenzlicht 18a induziertes Signal liefern. Dabei wird das Fluoreszenzlicht 18a durch das dispersive Element 20 nach der Wellenlänge zerlegt.

Aus der so ermittelten Geschwindigkeit kann das Vorliegen einer bestimmten chemischen Reaktion bzw. der Anteil der bereits umgewandelten Reagerizien bestimmt werden.

Das Spektrometer 3 bzw. eine Anordnung von Spektrometern kann auch einer Anordnung von Reaktionsgefäßen 4 zugeordnet sein. Etwa kann in einer Anordnung 4 von bis zu einigen Hundert von Reaktionsgefäßen 5, 5a jedem zweiten ein Spektrometer 3 gegenübergestellt sein, so daß jedes zweite Reaktionsgefäß 5a gleichzeitig ausgelesen werden kann. Es können aber auch die beiden Anordnungen relativ zueinander bewegt werden und so noch nicht vermessene Reaktionsgefäße 5 zur Messung vor die entsprechenden Spektrometer 3 positioniert werden.

Über eine Detektorauslesung kann die gewünschte Reaktion dann abgefragt werden. Die Detektorauslesung kann vorzugsweise auch rechnergesteuert erfolgen. In einer bevorzugten Ausführungsform der vorliegenden Erfindung benutzte Detektoren, in denen ein optisch sensitives Material ein 0-dimensionales Elektronengas ist, ergeben eine hohe obere Grenzfrequenz. In diesen Materialien bestimmt nur Hopping als Mechanismus der elektrischen Leitung den Signaltransfer. In einem derartigen 0-dimensionalen Elektronengas sind die Energieniveaus bei Raumtemperatur weiter als die thermische Energie k_{B}T getrennt, wobei bei k_{B} die Boltzmannkonstante ist. Somit sind bei Raumtemperatur (>27 meV) die vorzugsweise verwendeten Photowiderstände besonders rauscharm.

Durch Auslesen des Photostromes an dem als Photowiderstand ausgebildeten Detektor 22 wird die Fluoreszenzstrahlung nachgewiesen. Durch den Einbau einer Absorberschicht 25 auf der Unterseite 12 der Trägerplatte 2 wird zweckmäßigerweise erreicht, daß nur die in die Linsenöffnung fallende Intensität zur Detektor-Anordnung 21 des Spektrometers 3 gelangt. Ebenso ist erreicht, daß sich benachbarte Detektoren 22 nicht beeinflussen. Aufgrund der geringen Größe der Detektoren 22 können mehrere, vorzugsweise bis zu einige Hundert Detektoren 22 in einer Anordnung 21 realisiert werden.

Die Erfindung ist nicht auf die beschriebenen Ausführungsbeispiele beschränkt, die in vielfacher Weise abgewandelt werden können.

Die mehrfachen Beleuchtungs- und Spektrometriersysteme können jeweils auch mit nur einem Detektor 22 für das Licht der Wellenlänge einer spezifisch fluoreszierenden Substanz nach dem Beugungsgitter 20 ausgerüstet sein. So können alle Reaktionen, welche mit nur einem spezifischen Fluoreszenzmolekül gekennzeichnet werden können mit diesem System untersucht werden. Das hat eine erhebliche Vereinfachung der Auswerteelektronik zur Folge, da nur ein Photowiderstand an bestimmter Stelle aufgebaut und eingesetzt wird. Bei dieser Art der Detektoranordnung 21 ist eine begrenzte Auflösung des Spektrometers 3 ausreichend, was die erforderliche Güte der Fokussierung 15 und des Beugungsgitters 20 senkt.

Erfindungsgemäß kann die Lichtzuführung und die Anordnung des dispersiven Elements 20 von oben geneigt auf die Trägerplatte 2 bzw. geneigt von dieser weg angeordnet sein. Das bedeutet, daß die Laserdiode 8 auf einem separaten Halter über der Platte befestigt ist, aber das Strahlumlenkprisma 11 zur Umlenkung des Strahles 6 entfallen und nur durch eine reflexionsvermindernde Schicht zum Eintritt des Lichtes in die Trägerplatte 2 ersetzt wird. Desweiteren wird das Beugungsgitter 20 dabei direkt auf der Plattenoberfläche 9 liegend und ebenfalls auf einer reflexionsvermindernden Schicht zum besseren Durchtritt des Fluoreszenzlichtes 18 aufgebracht. Die Anordnung 21 von Photodetektoren 22 wird dann ebenfalls auf einer separaten Platte oberhalb der Trägerplatte 2 angebracht wird, was einer speziellen genauen Justierung der Laserdiode 8 und der Detektoren 22 bedarf.

Zum Erzielen besonders hoher spektraler Auflösung im Fluoreszenzlicht kann auch eine Kombination aus Prismen, und Gittern oder auch anderen z.B. aus photonischen Kristallen aufgebauten Spektrometern eingesetzt werden.

Die das anregende Licht aussendende Laserdiode 8 kann als Einzeldiode in dem Spektrometer bzw. in der Vorrichtung vorgesehen sein. Dabei ist es auch denkbar, die Laserdiode 8 monolithisch mit der Trägerplatte 2 zu integrieren. Die Laserdioden können batteriebetrieben sein.

In der Erfindung inbegriffen ist es auch, bei einem parallelen Aufbau mehrerer Spektrometer 3 bzw. Vorrichtungen, die Trägerplatten 2 miteinander separat zu halten oder auch miteinander zu verbinden. Desweitern beinhaltet die Erfindung auch die Realisierung von mehreren Spektrometern 3, die dabei sowohl reihen- als auch matrixartig auf einer gemeinsamen Trägerplatte angeordnet sein können.

Vorgesehen ist es auch, als Laserdiode 8 eine Powerdiode mit strahlteilendem Vielfach-Koppler in Multimode-Wellenleitertechnik auf der die Prismen und Linsen tragenden zentralen Trägerplatte 2 zu montieren. Zudem ist vorgesehen, das Licht in die einzelnen Reaktionsgefäße 5, 5a mit gleicher Intensität zu verteilen. Mit dieser Technik ist die gleichzeitige Versorgung von 1, 2, 4, 8, 16 usw. parallelen Vorrichtungen bzw. Spektrometern mit Licht gleicher Intensität möglich, was die Beurteilungsgeschwindigkeit der zu untersuchenden Reaktionen entsprechend vervielfacht.

Die Detektorauslesung kann z.B. auch über eine Infrarot-Signalausgabe geschehen. Zu einer Verbesserung des Signal/Rausch-Verhältnisses kann ein vorzugsweise miniaturisierter Chopper im Beleuchtungsstrahlengang vorgesehen sein, um z.B. einen detektorseitig angebrachten Lock-in Verstärker zu betreiben.

## Patentansprüche

1. Vorrichtung (1) zur optischen Spektroskopie umfassend wenigstens eine Lichtquelle (8) und wenigstens ein integriert hergestelltes Spektrometer (3), wobei
das wenigstens eine Spektrometer (3)
- eine Trägerplatte (2),
- eine als optische Mikrokomponente an der Unterseite (12) der Trägerplatte (2) integriert angebrachte Fokussierunglinse (13) zur Fokussierung eines von der Lichtquelle (8) ausgesandten ersten Lichtstrahls (6, 10) auf wenigstens ein Reaktionsgefäß (9) unterhalb der Trägerplatte (2),
- eine als optische Mikrokomponente an der Unterseite (12) der Trägerplatte (2) integriert angebrachte Sammellinse (16) zur Bündelung eines vom Reaktionsgefäß (9) ausgehenden zweiten Lichtstrahls (18) auf ein als optische Mikrokomponente auf der Oberseite der Trägerplatte (2) integriert angebrachtes dispersives Element (20), und
- wenigstens einen dem dispersiven Element (20) zugeordneten Detektor (22) aufweist, wobei oberhalb der Fokussierungslinse (13) und der Sammellinse (16) die Trägerplatte (2) jeweils einen lichtdurchlässigen Bereich (14, 17) aufweist.

2. Vorrichtung nach Anspruch 1, **dadurch gekennzeichnet, daß** die optischen Mikrokomponenten (11,13,16,19,20,21) monolithisch auf der Trägerplatte (2) aufgebracht sind.

3. Vorrichtung nach Anspruch 1 oder 2, **dadurch gekennzeichnet, daß** die optischen Mikrokomponenten (11,13,16,19,20,21) über eine additive Lithografie aufgebracht sind.

4. Vorrichtung nach einem der Ansprüche 1 bis 3, **dadurch gekennzeichnet, daß**
das wenigstens eine Spektrometer (3)
- ein auf der Oberseite (9) der Trägerplatte (2) angebrachtes erstes Umlenkelement (11) zur Umlenkung des von der Lichtquelle kommenden ersten Lichtstrahls (6) zu der an der Unterseite (12) der Trägerplatte (2) angebrachten Fokussierungslinse (13), und
ein an der Oberseite (9) der Trägerplatte (2) angebrachtes zweites Umlenkelement (19) aufweist, welches den zweiten Lichtstrahl (18) auf das an der Oberseite (9) der Trägerplatte (2) angebrachte dispersive Element (20) umlenkt, wobei
der Detektor(22) auf der Oberseite (9) der Trägerplatte (2) angebracht, und lithografisch hergestellt ist, und die an der Unterseite (12) der Trägerplatte (2) angebrachte Sammellinse (16) zur Bündelung des zweiten Lichtstrahls (18) dient.

5. Vorrichtung nach einem der Ansprüche 1 bis 4, **dadurch gekennzeichnet, daß** das dispersive Element (20) ein Beugungsgitter ist.

6. Vorrichtung nach Anspruch 5, **dadurch gekennzeichnet, daß** das Beugungsgitter (20) als ein Phasen- oder Echelette-Gitter ausgeführt ist.

7. Vorrichtung nach einem der Ansprüche 4 bis 6, **dadurch gekennzeichnet, daß** das wenigstens eine Spektrometer (3) eine Detektoranordnung (21) aus mehreren Detektoren (22) enthält.

8. Vorrichtung nach einem der Ansprüche 1 bis 7, **dadurch gekennzeichnet, daß** die Lichtquelle (8) als miniaturisierte unlösbar mit der Trägerplatte (2) verbundene Laserdiode ausgebildet ist.

9. Vorrichtung nach einem der vorstehenden Ansprüche, **dadurch gekennzeichnet, daß** mehrere Spektrometer (3) nebeneinander und/oder hintereinander an der Trägerplatte (2) integriert angebracht sind und der von der Lichtquelle (8) ausgesendete Lichtstrahl über wenigstens einen auf der Oberseite (9) der Trägerplatte (2) angebrachten Strahlteiler (24) den Spektrometern (3) zuführbar ist.

10. Vorrichtung nach einem der Ansprüche 1 bis 9, **dadurch gekennzeichnet, daß** mehrere Spektrometer (3) nebeneinander und/oder hintereinander an der Trägerplatte (2) integriert angebracht sind, wobei jedem Spektrometer (3) eine Lichtquelle (8) zugeordnet ist.

11. Vorrichtung nach einem der Ansprüche 1 bis 10, **dadurch gekennzeichnet, daß** unterhalb der Trägerplatte (2) eine Anordnung (4) aus Reaktionsgefäßen (5) angeordnet ist.

12. Vorrichtung nach Anspruch 11, **gekennzeichnet, durch** einen Antrieb zur relativen Bewegung des wenigstens einen Spektrometers (3) und der Anordnung (4) von Reaktionsgefäßen (5) zueinander.

13. Vorrichtung nach Anspruch 12, **dadurch gekennzeichnet, daß** der Antrieb eine Luftlagerung und/oder einen Verschiebetisch und/oder einen Piezoantrieb umfasst.

14. Verfahren zur Herstellung einer Vorrichtung zur optischen Spektroskopie nach einem der Ansprüche 1 bis 13, mit folgenden Verfahrensschritten:
- Anbringen wenigstens einer Lichtquelle (8) auf einer Trägerplatte (2);
- Erzeugen wenigstens eines Spektrometers (3) in drei-dimensionaler Integration an der Trägerplatte (2) mittels additiver Lithografie, wobei
das wenigstens eine Spektrometer (3) aus optischen Mikrokomponenten (11,13,16,19,20,21) aufgebaut wird.

## Claims

1. Device (1) for optical spectroscopy including at least one light source (8) and at least one spectrometer (3) of integrated manufacture, wherein the at least one spectrometer (3) has
- a substrate board (2),
- a focusing lens (13) mounted on the underside (12) of the substrate board (2) in an integrated manner as an optical microcomponent for focusing a first light beam (6, 10) emitted by the light source (8) onto at least one reaction vessel (9) below the substrate board (2),
- a converging lens (16) mounted on the underside (12) of the substrate board (2) in an integrated manner as an optical microcomponent for concentrating a second light beam (18) emerging from the reaction vessel (9) onto a dispersive element (20) mounted on the top of the substrate board (2) in an integrated manner as an optical microcomponent, and
- at least one detector (22) associated with the dispersive element (20), wherein the substrate board (2) has a light-transmissive region (14, 17) above each of the focusing lens (13) and the converging lens (16).

2. Device according to claim 1, **characterized in that** the optical microcomponents (11, 13, 16, 19, 20, 21) are applied monolithically to the substrate board (2).

3. Device according to claim 1 or 2, **characterized in that** the optical microcomponents (11, 13, 16, 19, 20, 21) are applied by means of additive lithography.

4. Device according to any one of claims 1 through 3, **characterized in that** the at least one spectrometer (3) has
- a first deflection element (11) mounted on the top (9) of the substrate board (2) for deflecting the first light beam (6) coming from the light source to the focusing lens (13) mounted on the underside (12) of the substrate board (2), and
- has a second deflection element (19) mounted on the top (9) of the substrate board (2), which deflects the second light beam (18) onto the dispersive element (20) mounted on the top (9) of the substrate board (2), wherein
the detector (22) is mounted on the top (9) of the substrate board (2) and is produced lithographically, and the converging lens (16) mounted on the underside (12) of the substrate board (2) is used for concentrating the second light beam (18).

5. Device according to any one of claims 1 through 4, **characterized in that** the dispersive element (20) is a diffraction grating.

6. Device according claim 5, **characterized in that** the diffraction grating (20) is designed as a phase grating or echelette grating.

7. Device according to any one of claims 4 through 6, **characterized in that** the at least one spectrometer (3) contains a detector array (21) composed of a plurality of detectors (22).

8. Device according to any one of claims 1 through 7, **characterized in that** the light source (8) is designed as a miniaturized laser diode permanently attached to the substrate board (2).

9. Device according to any one of the preceding claims, **characterized in that** multiple spectrometers (3) are mounted next to one another and/or behind one another on the substrate board (2) in an integrated manner and the light beam emitted by the light source (8) can be delivered to the spectrometers (3) through at least one beam splitter (24) mounted on the top (9) of the substrate board (2).

10. Device according to any one of claims 1 through 9, **characterized in that** multiple spectrometers (3) are mounted next to one another and/or behind one another on the substrate board (2) in an integrated manner, wherein a light source (8) is associated with each spectrometer (3).

11. Device according to any one of claims 1 through 10, **characterized in that** an array (4) of reaction vessels (5) is located beneath the substrate board (2).

12. Device according to claim 11, **characterized by** a drive for movement of the at least one spectrometer (3) and the array (4) of reaction vessels (5) relative to one another.

13. Device according to claim 12, **characterized in that** the drive includes an air bearing and/or a movable platform and/or a piezo drive.

14. Method for producing a device for optical spectroscopy according to any one of claims 1 through 13, having the following steps:
- mounting at least one light source (8) on a substrate board (2),
- producing at least one spectrometer (3) in three-dimensional integration on the substrate board (2) by means of additive lithography, wherein the at least one spectrometer (3) is constructed of optical microcomponents (11, 13, 16, 19, 20, 21).

## Revendications

1. Dispositif (1) de spectroscopie optique, comprenant au moins une source lumineuse (8) et au moins un spectromètre (3) fabriqué de manière intégrée, l'au moins un spectromètre (3) présentant
- une plaque de support (2),
- une lentille de focalisation (13) sous la forme de microcomposant optique placée de manière intégrée sur la face inférieure (12) de la plaque de support (2), destinée à focaliser un premier faisceau lumineux (6, 10) émis par la source lumineuse (8) sur au moins un récipient de réaction (9) au-dessous de la plaque de support (2),
- une lentille convexe (16) sous la forme de microcomposant optique placée de manière intégrée sur la face inférieure (12) de la plaque de support (2), destinée à concentrer un deuxième faisceau lumineux (18) provenant du récipient de réaction (9) sur un élément dispersif (20) sous la forme de microcomposant optique placé de manière intégrée sur la face supérieure de la plaque de support (2) et
- au moins un détecteur (22) associé à l'élément dispersif (20), la plaque de support (2) présentant une zone transparente (14, 17) au-dessus de la lentille de focalisation (13) et au-dessus de la lentille convexe (16).

2. Dispositif selon la revendication 1, **caractérisé en ce que** les microcomposants optiques (11, 13, 16, 19, 20, 21) sont placés de manière monolithique sur la plaque de support (2).

3. Dispositif selon la revendication 1 ou 2, **caractérisé en ce que** les microcomposants optiques (11, 13, 16, 19, 20, 21) sont placés par l'intermédiaire d'une lithographie additive.

4. Dispositif selon l'une quelconque des revendications 1 à 3, **caractérisé en ce que** l'au moins un spectromètre (3) présente
- un premier élément de déviation (11) placé sur la face supérieure (9) de la plaque de support (2) destiné à dévier le premier faisceau lumineux (6) venant de la source lumineuse vers la lentille de focalisation (13) placée sur la face inférieure (12) de la plaque de support (2) et
- un deuxième élément de déviation (19) placé sur la face supérieure (9) de la plaque de support (2), qui dévie le deuxième faisceau lumineux (18) sur l'élément dispersif (20) placé sur la face supérieure (9) de la plaque de support (2),
le détecteur (22) étant placé sur la face supérieure (9) de la plaque de support (2) et fabriqué de manière lithographique, et la lentille convexe (16) placée sur la face inférieure (12) de la plaque de support (2) servant à concentrer le deuxième faisceau lumineux (18).

5. Dispositif selon l'une quelconque des revendications 1 à 4, **caractérisé en ce que** l'élément dispersif (20) est un réseau de diffraction.

6. Dispositif selon la revendication 5, **caractérisé en ce que** le réseau de diffraction (20) est réalisé sous la forme d'un réseau de phase ou de réseau échelette.

7. Dispositif selon l'une quelconque des revendications 4 à 6, **caractérisé en ce que** l'au moins un spectromètre (3) contient un agencement de détecteurs (21) composé de plusieurs détecteurs (22).

8. Dispositif selon l'une quelconque des revendications 1 à 7, **caractérisé en ce que** la source lumineuse (8) est réalisée sous la forme de diode laser miniaturisée reliée de manière inséparable à la plaque de support (2).

9. Dispositif selon l'une quelconque des revendications précédentes, **caractérisé en ce que** plusieurs spectromètres (3) sont placés de manière intégrée sur la plaque de support (2) les uns à côté des autres et/ou les uns derrière les autres et le faisceau lumineux émis par la source lumineuse (8) peut être amené aux spectromètres (3) par l'intermédiaire d'au moins un diviseur de rayonnement (24) placé sur la face supérieure (9) de la plaque de support (2).

10. Dispositif selon l'une quelconque des revendications 1 à 9, **caractérisé en ce que** plusieurs spectromètres (3) sont placés de manière intégrée sur la plaque de support (2) les uns à côté des autres et/ou les uns derrière les autres, une source lumineuse (8) étant associée à chaque spectromètre (3).

11. Dispositif selon l'une quelconque des revendications 1 à 10, **caractérisé en ce qu'**un agencement (4) de récipients de réaction (5) est disposé au-dessous de la plaque de support (2).

12. Dispositif selon la revendication 11, **caractérisé par** un entraînement destiné au déplacement relatif de l'au moins un spectromètre (3) et de l'agencement (4) de récipients de réaction (5) l'un par rapport à l'autre.

13. Dispositif selon la revendication 12, **caractérisé en ce que** l'entraînement comprend un support pneumatique et/ou une table mobile et/ou un entraînement piézoélectrique.

14. Procédé de fabrication d'un dispositif de spectroscopie optique selon l'une quelconque des revendications 1 à 13, comprenant les étapes de procédé suivantes :
- montage d'au moins une source lumineuse (8) sur une plaque de support (2) ;
- production d'au moins un spectromètre (3) selon une intégration tridimensionnelle sur la plaque de support (2) au moyen de lithographie additive,
l'au moins un spectromètre (3) étant constitué de microcomposants optiques (11, 13, 16, 19,20,21).
